# EUROPÄISCHE PATENTANMELDUNG

(11) **EP 1 533 776 A2**
(43) Veröffentlichungstag der Anmeldung: **25.05.2005**
(21) Anmeldenummer: 04026494.7
(22) Anmeldetag: 09.11.2004
(51) Int. Cl.: G08G 1/16

(54) **Kurvenwarnsystem**

(30) Priorität: 19.11.2003 DE 10354072
(71) Anmelder: DaimlerChrysler AG, 70567 Stuttgart (DE)
(72) Erfinder: Boll, Wolf, 71384 Weinstadt (DE)

(57) **Zusammenfassung**

Bei einem Verfahren zur Warnung eines Fahrers eines Fahrzeugs (1) vor möglichen Kollisionen mit Objekten (34, 35) bei einer Kurvenfahrt, bei dem sich neben dem Fahrzeug befindende Objekte erfasst werden und ein Warnsignal ausgegeben wird, wenn eine Kollision droht, wird die Schleppkurve (S1, S2, S3) der Hinterachse (15) des Fahrzeugs (1) ermittelt und wird überprüft, ob ein erfasstes Objekt (34, 35) auf der Schleppkurve liegt. Dadurch kann die Verkehrssicherheit erhöht werden.

## Beschreibung

Die Erfindung betrifft ein Verfahren zur Warnung eines Fahrers eines Fahrzeugs vor möglichen Kollisionen mit Objekten bei einer Kurvenfahrt, bei dem sich neben dem Fahrzeug befindende Objekte erfasst werden und ein Warnsignal ausgegeben wird, wenn eine Kollision droht.

Fahrer von insbesondere langen Fahrzeugen haben häufig Mühe zu erkennen, ob die Hinterräder ihres Fahrzeugs in engen Kurven ein seitliches Objekt oder Hindernis, wie z.B. eine Bordsteinkante oder einen Pfosten, überrollen oder streifen oder Personen gefährden.

Es sind Abstandssensoren bekannt, die dem Fahrer ein vor oder hinter dem Fahrzeug befindliches Objekt melden. Solche Sensoren könnten auch seitlich am Fahrzeug verwendet werden. Allerdings würden solche Sensoren ständig ansprechen, wenn sich Objekte, insbesondere Bordsteine, seitlich am Fahrzeug befinden, obwohl bei Geradeausfahrt keinerlei Gefahr besteht, diese zu überrollen. Würde bei solchen Hindernissen eine Anzeige oder Warnung an den Fahrer gegeben, würde er die Aufmerksamkeit verlieren und den Verkehr zusätzlich gefährden.

Aus der DE 101 25 966 A1 ist ein Kurvenwarnsystem für Kraftfahrzeuge, insbesondere für Kraftfahrzeuge mit großer Länge, bekannt. Eine Sensoreinrichtung erfasst den Lenkwinkel der Vorderachse des Kraftfahrzeugs und - bei mehreren lenkbaren Achsen - auch deren Lenkwinkel. Eine Erkennungseinrichtung erkennt Hindernisse in der seitlichen Umgebung des Kraftfahrzeuges. Wenn die Erkennungseinrichtung ein Hindernis erkennt, berechnet eine Berechnungseinrichtung anhand des oder der Lenkwinkel sowie der Fahrgeschwindigkeit des Fahrzeuges voraus, ob eine Kollision mit dem Hindernis droht, und erzeugt bei Kollisionsgefahr ein Warnsignal für den Fahrer.

Aufgabe der vorliegenden Erfindung ist es, ein Verfahren und ein Kurvenwarnsystem zu schaffen, mit denen eine Kollisionsgefahr zuverlässig erkannt werden kann.

Diese Aufgabe wird erfindungsgemäß durch ein Verfahren der eingangs genannten Art gelöst, bei dem die Schleppkurve der Hinterachse des Fahrzeugs ermittelt wird und überprüft wird, ob ein erfasstes Objekt innerhalb der Schleppkurve liegt. Dabei ist zu beachten, dass die Schleppkurve der Schleppspur entspricht, die durch die Fahrspur der Hinterräder des Fahrzeugs bestimmt ist. Die ungelenkten Hinterräder eines Fahrzeugs beschreiben bei Bogenfahrt einen engeren Bogen als die gelenkten Vorderräder. Aus diesem Grund werden häufig Objekte bzw. Hindernisse durch die Hinterräder erfasst, die von den Vorderrädern umfahren werden. Wird nun die Schleppkurve bestimmt, kann überprüft werden, ob ein erkanntes Objekt durch die Hinterräder erfasst werden wird oder nicht. Liegt ein erkanntes Objekt innerhalb der Schleppkurve, d.h. auf Kollisionskurs, kann der Fahrer gewarnt werden, so dass der Fahrer entweder die Kurvenbahn abändern oder das Fahrzeug rechtzeitig stoppen kann. Vorzugsweise werden Objekte, wie Randsteine, Personen und Verkehrsschilder, erfasst. Da ermittelt wird, ob ein erkanntes Objekt in den Erfassungsbereich des Fahrzeugs bei Weiterfahrt hineingeraten wird, wird ein Warnsignal nur ausgegeben, wenn dies tatsächlich der Fall ist. Es wird nicht immer dann ein Warnsignal ausgegeben, wenn ein Objekt erfasst wird. Fährt das Fahrzeug beispielsweise parallel zu einer Bordsteinkante, wird kein Warnsignal erzeugt, da die Bordsteinkante nicht in die Schleppkurve der Hinterachse gerät. Bei dem Fahrzeug kann es sich um ein eingliedriges Fahrzeug oder um ein mehrgliedriges Fahrzeug, z.B. ein Gespann, bestehend aus Zugmaschine und Anhänger, handeln.

Bei einer bevorzugten Verfahrensvariante ist vorgesehen, dass der Lenkwinkel oder eine proportionale Größe des Fahrzeugs erfasst wird und daraus die Schleppkurve bestimmt wird. Je nach Lenkwinkel ergeben sich unterschiedliche Drehpunkte für das Fahrzeug und damit zugehörige Schleppkurven. Durch die Erfassung des Lenkwinkels kann daher die Schleppkurve bestimmt werden und kann bestimmt werden, ob ein Objekt auf der Schleppkurve liegen wird.

Vorteilhafterweise wird der seitliche Abstand des Fahrzeugs zu den erfassten Objekten bestimmt. Durch diese Maßnahme kann besonders einfach festgestellt werden, ob ein Objekt auf der Schleppkurve liegt oder nicht. Zudem ermöglicht das Verfahren auch die Erfassung von sich bewegenden Objekten, die z. B. selbst in die Schleppkurve eintreten, indem die Messung und Auswertung laufend wiederholt werden.

Bei einer bevorzugten Verfahrensvariante wird dem Fahrer eine akustische und/oder visuelle Warnung gegeben, wenn ein Objekt auf der Schleppkurve liegt. Eine akustische Warnung kann beispielsweise ein Warnton sein, eine visuelle Warnung kann ein Blinkzeichen oder beispielsweise eine Hindernisanzeige in einer Anzeigeeinrichtung in der Fahrerkabine sein.

Bei einer besonders bevorzugten Verfahrensvariante kann vorgesehen sein, dass überprüft wird, ob die erfassten Objekte sich bewegen und auf die ermittelte Schleppkurve zu geraten drohen. Durch diese Maßnahme kann insbesondere die Verkehrssicherheit von Stadtbussen und Schulbussen erhöht werden. Das Stolpern und Fallen einer Person kann dadurch frühzeitig gemeldet werden. Solche Ereignisse führen insbesondere bei älteren Menschen und Kindern häufig zu Überrollungsunfällen. Durch das erfindungsgemäße Verfahren können derartige Überrollungsunfälle vermieden werden. Für die Überprüfung, ob ein sich bewegendes Objekt in die Schleppkurve geraten wird, wird beispielsweise davon ausgegangen, dass das Objekt die Richtung und Geschwindigkeit beibehält. Außerdem kann vorgesehen sein, dass die momentane Geschwindigkeit des Objekts erfasst wird.

Wenn die Position der erfassten Objekte bestimmt wird und mit einem ortsfesten Koordinatensystem korreliert wird, können zusätzliche nachgeschleppte Achsen von durch das Fahrzeug nachgeschleppten Fahrzeugteilen bei der Kollisionsüberprüfung mit berücksichtigt werden, ohne dass an den zugehörigen Fahrzeugseiten der nachgeschleppten Fahrzeugteile eigene seitliche Abstandssensoren notwendig sind. Als nachgeschleppte Fahrzeugteile kommen beispielsweise Achsauflieger, Sattelschlepper, Anhänger und der nachgeschleppte Teil von Gelenkbussen in Frage. Diese Maßnahme ermöglicht es einem Fahrer einer Zugmaschine, die Art oder Länge des Anhängers zu wechseln, ohne dabei die Funktion der Warneinrichtung einzubüssen. Vorteilhafterweise wird die Position mit einem ortsfesten Koordinatensystem, d.h. nicht mit einem fahrzeugfesten Koordinatensystem, korreliert.

Bei einer Weiterbildung des Verfahrens kann vorgesehen sein, dass zusätzlich zum Lenkwinkel die vom Fahrzeug zurückgelegte Wegstrecke erfasst wird und die Korrelation mittels des erfassten Lenkwinkels und der erfassten Wegstrecke erfolgt.

Besonders bevorzugt ist es, wenn für eine nachgeschleppte Achse eines nachgeschleppten Fahrzeugteils eine Schleppkurve ermittelt wird. Anhand einer solchen Schleppkurve kann ermittelt werden, ob ein Objekt auf der Schleppkurve der nachgeschleppten Achse liegt. Ist dies der Fall, so kann ebenfalls ein Warnsignal ausgegeben werden.

Es kann vorgesehen sein, dass die Art des nachgeschleppten Fahrzeugteils vom Fahrer ausgewählt wird. Somit kann für jede angehängte Anhängerart die Schleppkurve der nachgeschleppten Achse ermittelt werden und kann eine Warnung erfolgen, wenn ein Objekt auf Kollisionskurs liegt.

Bei einer bevorzugten Verfahrensvariante ist vorgesehen, dass ein Schleppkurvenbereich zumindest teilweise ausgeleuchtet wird. Durch diese Maßnahme wird die Verkehrssicherheit erhöht. Die Ausleuchtung ist insbesondere vorteilhaft bei schlechtem Wetter oder bei Dunkelheit. Es kann vorgesehen sein, dass die Ausleuchtung nur aktiviert oder aktivierbar ist, wenn schlechte Sichtverhältnisse herrschen. Der Schleppkurvenbereich kann die an die Schleppkurve angrenzende Umgebung und die Schleppkurve selbst zumindest teilweise umfassen.

Bei einer Weiterbildung des Verfahrens kann vorgesehen sein, dass die Schleppkurve derart ausgeleuchtet wird, dass andere Verkehrsteilnehmer nicht geblendet werden. Durch diese Maßnahme wird die Verkehrssicherheit weiter erhöht.

Es kann vorgesehen sein, dass der Schleppkurvenbereich stets nur in einem Warnfall ausgeleuchtet wird. Die Ausleuchtung hat eine zusätzlich Warnfunktion, und zwar nicht nur für den Fahrer sondern auch für sich neben dem Fahrzeug befindende Verkehrsteilnehmer wie Fußgänger, Radfahrer oder Motorradfahrer. Hierbei kann auch eine akustische Warnung nach Außen abgegeben werden.

Die Aufgabe wird außerdem gelöst durch ein Kurvenwarnsystem mit einer Erfassungseinrichtung zur Erfassung von Objekten in der seitlichen Umgebung eines Fahrzeugs, einer Auswerteeinrichtung, die auswertet, ob eine Kollision mit einem erfassten Objekt droht und einer Warneinrichtung, die bei drohender Kollision ein Warnsignal ausgibt. Die Auswerteeinrichtung umfasst Mittel zum Ermitteln der Schleppkurve der Hinterachse des Fahrzeugs und zum Überprüfen, ob ein erfasstes Objekt auf der Schleppkurve liegt. Mit einem solchen Kurvenwarnsystem können Kollisionen mit sich auf der Seite des Fahrzeugs befindenden Objekten zuverlässig vermieden werden.

Bei einer bevorzugten Ausführungsform ist vorgesehen, dass die Erfassungseinrichtung seitlich am Fahrzeug angeordnete Sensoren, insbesondere Abstandssensoren, umfasst. Durch die Abstandssensoren kann der Abstand der Objekte zum Fahrzeug bestimmt werden. Aufgrund der erfassten Abstände kann ermittelt werden, ob ein Objekt auf der Schleppkurve liegt oder nicht.

Wenn ein Lenkwinkelsensor vorgesehen ist, kann die Schleppkurve der Hinterachse besonders einfach ermittelt werden.

Bei einer bevorzugten Ausführungsform ist ein Wegstreckenzähler vorgesehen. Aufgrund der vom Wegstreckenzähler und Lenkwinkelsensor ermittelten Daten kann die Position der erfassten Objekte in einem ortsfesten Koordinatensystem ermittelt werden. Somit können auch Objekte berücksichtigt werden, die auf der Schleppkurve einer nachgeschleppten Achse eines nachgeschleppten Fahrzeugteils liegen.

Bei einer bevorzugten Ausführungsform ist eine Warnanzeige vorgesehen. Auf der Warnanzeige kann dem Fahrer visuell angezeigt werden, dass ein Objekt auf der Schleppkurve liegt.

Durch Auswahlmittel, insbesondere eine Menüauswahl oder ein Tastenfeld, kann ausgewählt werden, ob und was für ein Fahrzeugteil durch die Zugmaschine gezogen wird. Außerdem kann vorgesehen sein, dass mit den Auswahlmitteln eine Seitenausleuchtung der Schleppkurve aktiviert werden kann. Die Anzeigeeinrichtung und die Auswahlmittel können in einer Einheit kombiniert werden.

Die Verkehrssicherheit kann weiter erhöht werden, wenn Leuchten zur Ausleuchtung zumindest eines Teils der Schleppkurve vorgesehen sind. Durch diese Maßnahme werden nicht nur der Fahrer sondern auch weitere Verkehrsteilnehmer gewarnt und darauf hingewiesen, dass der ausgeleuchtete Bereich von der Hinterachse des Fahrzeugs bzw. eines Anhängers befahren werden wird.

Bei einer bevorzugten Ausführungsform ist vorgesehen, dass die Leuchten von der Auswerteeinrichtung angesteuert sind. Die Leuchten können von der Auswerteinheit derart angesteuert werden, dass sie nur die Schleppkurve ausleuchten, wenn ein Objekt im Bereich der Schleppkurve erkannt wurde.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Ausführungsbeispiele der Erfindung werden anhand einer Zeichnung näher erläutert. Dabei zeigen:
- Fig. 1: eine stark schematisierte Draufsicht auf ein Fahrzeug;
- Fig. 2: eine schematische Darstellung zur Erläuterung der Ermittlung der Schleppkurve.

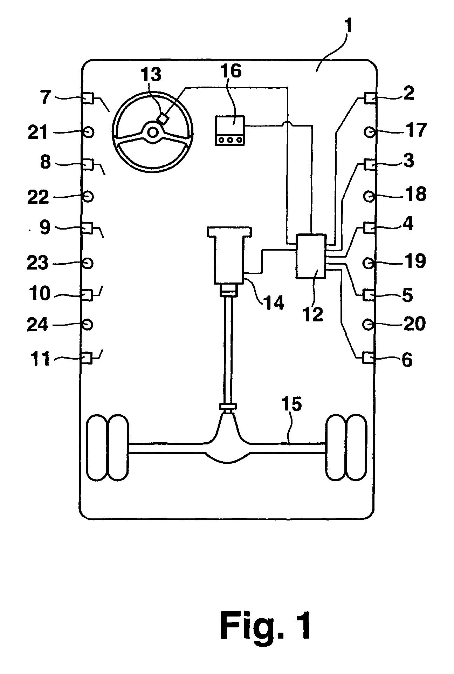

In der **Fig. 1** ist eine Draufsicht auf ein Fahrzeug **1** gezeigt, das beidseitig Sensoren **2 bis 11**, insbesondere Abstandssensoren, aufweist. Durch die Sensoren 2 bis 11 werden Objekte, die sich neben dem Fahrzeug 1 befinden, erfasst. Die Sensoren 2 bis 11 sind Bestandteil einer Erfassungseinrichtung. Sie stehen mit einer Auswerteeinrichtung **12** in Verbindung, wobei die Verbindung der Sensoren 7 - 11 mit der Auswerteeinrichtung 12 nur angedeutet ist. Der Auswerteeinrichtung 12 werden außerdem die Signale eines Lenkwinkelsensors 13 und eines Wegstreckenzählers **14,** der die vom Fahrzeug 1 zurück gelegte Strecke oder eine dazu proportionale Größe ermittelt, zugeführt. Aus diesen Signalen ermittelt die Auswerteeinrichtung 12 die Schleppkurve der Hinterachse 15 des Fahrzeugs 1 sowie ob ein erfasstes Objekt auf der Schleppkurve liegt. Ermittelt die Auswerteeinrichtung 12, dass ein von den Sensoren 2 bis 11 erfasstes Objekt auf der Schleppkurve liegt, wird über eine Warneinrichtung **16** dem Fahrer ein Warnsignal ausgegeben, beispielsweise durch ein Blinkzeichen. Zusätzlich können auch akustische Warnmittel vorgesehen sein, über die das Warnsignal nach Außen als akustische Warnung abgegeben wird. Die Warneinrichtung 16 umfasst außerdem eine Menüauswahl, über die der Fahrer auswählen kann, ob an das Fahrzeug 1 ein gezogenes Fahrzeugteil, wie z.B. ein Anhänger, angehängt ist. Außerdem kann der Fahrer durch die Menüauswahl der Warneinrichtung 16 auswählen, ob Leuchten **17 bis 24** zum zumindest teilweisen Ausleuchten der Schleppkurve und/oder der angrenzenden Umgebung aktiviert werden sollen.

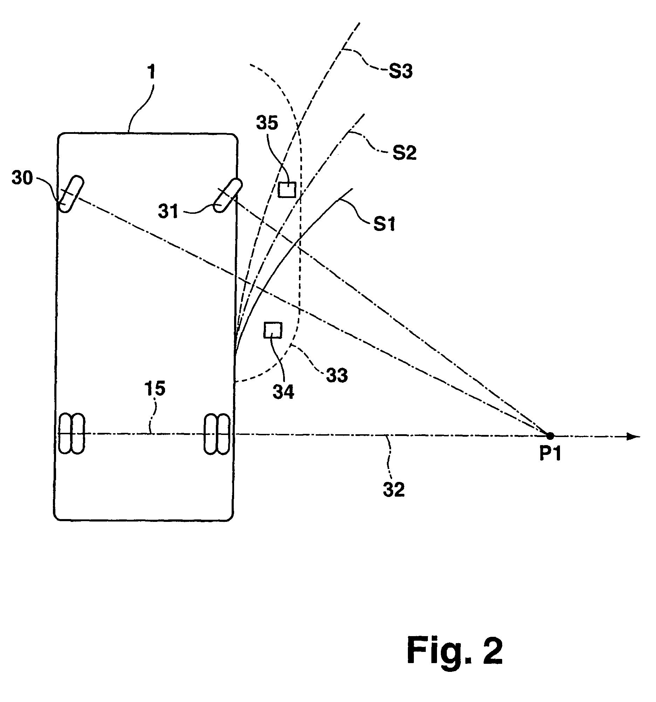

In der **Fig. 2** ist das Fahrzeug 1 mit eingeschlagenen Vorderrädern **30, 31** dargestellt. Durch die Hinterachse 15 ist eine verlängerte Linie **32** gezeichnet, auf der die Drehpunkte des Fahrzeugs 1 liegen. Für den Einschlag der Räder **30, 31** ergibt sich ein Drehpunkt **P1**. Dies bedeutet, dass die Räder der Hinterachse 15 eine Schleppkurve **S1** befahren. In der Fig. 2 ist außerdem ein Erfassungsbereich **33** der Sensoren auf der rechten Seite des Fahrzeugs 1 dargestellt. Das im Erfassungsbereich 33 liegende Objekt **34** liegt außerhalb der Schleppkurve S1. Wird nur dieses Objekt erkannt, erfolgt kein Warnsignal an den Fahrer. Das Objekt **35** liegt dagegen innerhalb der Schleppkurve S1, und es wird deshalb ein Warnsignal an den Fahrer des Fahrzeugs 1 ausgegeben. Ist der Einschlag der Räder 30, 31 weniger stark, so ergibt sich beispielsweise die Schleppkurve **S2,** wobei der zugehörige Drehpunkt P2 nicht dargestellt ist und rechts vom Punkt P1 liegt. Das Objekt 35 liegt innerhalb der Schleppkurve S2, so dass bei erfasstem zugehörigem Lenkwinkel ein Warnsignal an den Fahrer ausgegeben wird. Bei einem noch geringeren Lenkwinkel ergibt sich die Schleppkurve **S3**. Sowohl das Objekt 34 als auch das Objekt 35 liegen außerhalb der Schleppkurve S3, so dass, obwohl die Objekte 34, 35 im Erfassungsbereich 33 liegen, kein Warnsignal an den Fahrer ausgegeben wird.

## Patentansprüche

1. Verfahren zur Warnung eines Fahrers eines Fahrzeugs (1) vor möglichen Kollisionen mit Objekten (34, 35) bei einer Kurvenfahrt, bei dem sich neben dem Fahrzeug befindende Objekte erfasst werden und ein Warnsignal ausgegeben wird, wenn eine Kollision droht,
**dadurch gekennzeichnet,**
**dass** die Schleppkurve (S1, S2, S3) der Hinterachse (15) des Fahrzeugs (1) ermittelt wird und überprüft wird, ob ein erfasstes Objekt (34, 35) innerhalb der Schleppkurve (S1, S2, S3) liegt.

2. Verfahren nach Anspruch 1,
**dadurch gekennzeichnet,**
**dass** der Lenkwinkel oder eine dazu proportionale Größe des Fahrzeugs (1) erfasst wird und daraus die Schleppkurve (S1, S2, S3) bestimmt wird.

3. Verfahren nach einem der vorhergehenden Ansprüche,
**dadurch gekennzeichnet,**
**dass** der seitliche Abstand des Fahrzeugs (1) zu den erfassten Objekten (34, 35) bestimmt wird.

4. Verfahren nach einem der vorhergehenden Ansprüche,
**dadurch gekennzeichnet,**
**dass** dem Fahrer eine akustische und/oder visuelle Warnung gegeben wird.

5. Verfahren nach einem der vorhergehenden Ansprüche,
**dadurch gekennzeichnet,**
**dass** überprüft wird, ob die erfassten Objekte (34, 35) sich bewegen und auf die ermittelte Schleppkurve (S1, S2, S3) zu geraten drohen.

6. Verfahren nach einem der vorhergehenden Ansprüche,
**dadurch gekennzeichnet,**
**dass** die Position der erfassten Objekte bestimmt wird und mit einem ortsfesten Koordinatensystem korreliert wird.

7. Verfahren nach Anspruch 6,
**dadurch gekennzeichnet,**
**dass** zusätzlich zum Lenkwinkel die vom Fahrzeug zurück gelegte Wegstrecke oder eine dazu proportionale Größe erfasst wird und die Korrelation mittels des erfassten Lenkwinkels und der erfassten Wegstrecke erfolgt.

8. Verfahren nach einem der vorhergehenden Ansprüche
**dadurch gekennzeichnet,**
**dass** für eine nachgeschleppte Achse eines nachgeschleppten Fahrzeugteils eine Schleppkurve ermittelt wird.

9. Verfahren nach Anspruch 8,
**dadurch gekennzeichnet,**
**dass** die Art des nachgeschleppten Fahrzeugteils ausgewählt wird.

10. Verfahren nach einem der vorhergehenden Ansprüche,
**dadurch gekennzeichnet,**
**dass** ein Schleppkurvenbereich zumindest teilweise ausgeleuchtet wird.

11. Verfahren nach Anspruch 11,
**dadurch gekennzeichnet,**
**dass** der Schleppkurvenbereich derart ausgeleuchtet wird, dass andere Verkehrsteilnehmer nicht geblendet werden.

12. Verfahren nach einem der Ansprüche 10 oder 11,
**dadurch gekennzeichnet,**
**dass** der Schleppkurvenbereich stets oder nur in einem Warnfall ausgeleuchtet wird.

13. Verfahren nach einem der vorhergehenden Ansprüche,
**dadurch gekennzeichnet,**
**dass** eine akustische Warnung als Warnsignal nach Außen abgegeben wird.

14. Kurvenwarnsystem mit einer Erfassungseinrichtung zur Erfassung von Objekten (34, 35) in der seitlichen Umgebung eines Fahrzeugs (1), einer Auswerteeinrichtung (12), die auswertet, ob eine Kollision mit einem erfassten Objekt (34, 35) droht und einer Warneinrichtung (16), die bei drohender Kollision ein Warnsignal ausgibt,
**dadurch gekennzeichnet,**
**dass** die Auswerteeinrichtung (12) Mittel zum Ermitteln der Schleppkurve (S1, S2, S3) der Hinterachse (15) des Fahrzeugs (1) und zum Überprüfen, ob ein erfasstes Objekt (34, 35) auf der Schleppkurve (S1, S2, S3) liegt, umfasst.

15. Kurvenwarnsystem nach Anspruch 14,
**dadurch gekennzeichnet,**
**dass** die Erfassungseinrichtung seitlich am Fahrzeug angeordnete Sensoren (2 - 11), insbesondere Abstandssensoren, umfasst.

16. Kurvenwarnsystem nach einem der Ansprüche 14 oder 15,
**dadurch gekennzeichnet,**
**dass** ein Lenkwinkelsensor (13) vorgesehen ist.

17. Kurvenwarnsystem nach einem der Ansprüche 14 bis 16,
**dadurch gekennzeichnet,**
**dass** ein Wegstreckenzähler (14) vorgesehen ist.

18. Kurvenwarnsystem nach einem der Ansprüche 14 bis 17,
**dadurch gekennzeichnet,**
**dass** eine Warnanzeige (16) vorgesehen ist.

19. Kurvenwarnsystem nach einem der Ansprüche 14 bis 18,
**dadurch gekennzeichnet,**
**dass** Auswahlmittel zum Auswählen der Art eines nachgeschleppten Fahrzeugteils vorgesehen sind.

20. Kurvenwarnsystem nach einem der Ansprüche 14 bis 19,
**dadurch gekennzeichnet,**
**dass** Leuchten (17 - 24) zur Ausleuchtung zumindest eines Teils eines Schleppkurvenbereichs vorgesehen sind.

21. Kurvenwarnsystem nach einem der Ansprüche 14 bis 20,
**dadurch gekennzeichnet,**
**dass** die Leuchten (17 - 24) von der Auswerteeinrichtung (12) angesteuert sind.

22. Kurvenwarnsystem nach einem der Ansprüche 14 bis 21,
**dadurch gekennzeichnet,**
**dass** akustische Warnmittel zur Ausgabe des Warnsignals nach Außen vorgesehen sind.
